# EUROPEAN PATENT APPLICATION

(11) **EP 1 835 665 A1**
(43) Date of publication of application: **19.09.2007**
(21) Application number: 06791034.9
(22) Date of filing: 19.09.2006
(51) Int. Cl.: H04L 12/54, H04M 3/42

(54) **METHOD FOR PROVIDING PRESENCE INFORMATION AND APPARATUS THEREOF**

(30) Priority: 26.10.2005 CN 200510114591
(71) Applicant: Huawei Technologies Co., Ltd., Longgang District, Shenzhen Guangdong 518129 (CN)
(72) Inventor: ZHAO, Yang, Shenzhen, Guangdong 518129 (CN); SUN, Qian, Shenzhen, Guangdong 518129 (CN)
(74) Representative: Epping, Wilhelm
(86) International application number: PCT/CN2006/002442
(87) International publication number: WO 2007/048306

(57) **Abstract**

The present invention discloses a method for providing presence information, a watcher, a presence server, a presence system and a presentity. It enables the provisioning of history and future presence information, while the prior arts can provide only presence information corresponding to the current time. The method provided by the present invention includes: setting time elements of presence information; recording relevant time information of presence information in the time elements; providing the watcher with presence information together with relevant time information.

## Description

### FIELD OF THE INVENTION

The present invention is related to the Internet and radio communication and in particular to a method and apparatus for providing presence information.

### Background of the Invention

Presence service is a communication service that collects and distributes presence information. At present, it is usually provided together with instant message service. It can also be provided alone or combined with other services like Internet game. International standardization organizations including the Internet Engineering Task Force (IETF) and the Open Mobile Alliance (OMA) have defined primary standards for presence service, which are in continuous improvement. The presence information includes status and communication address. The status and the communication address are defined in relevant standards, such as RFC 2778, "A Model for Presence and Instant Messaging". The present invention references terms used in RFC 2778, naming the entity providing presence information for the presence service as a presentity client, and the entity requesting presence information from the presence service as a watcher client.

At present, the presence service is applied in the following scenarios:
1. A user publishes user presence information. The user may publish the user presence information using application in his mobile phone or PC. For instance, the user publishes the presence information of ongoing meeting.
2. A presence server publishes presence information. For instance, a radio station publishes a name of a song being broadcast; a call center publishes the presence information of call congestion.

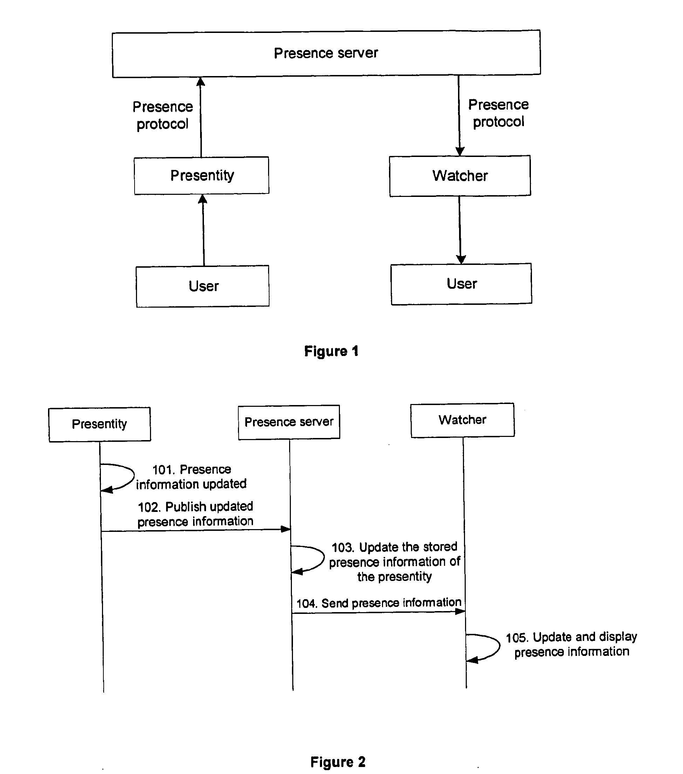

Figure 1 shows the networking diagram of a presence system in the prior art. As shown in Figure 1, the presence system includes:
a presence server, and a presentity client and a watcher client that are connected with the presence server. Presence information is distributed from the presence server to the watcher client via presence protocol or is published by the presentity client via presence protocol.

For convenience, presence information is sorted into current presence information, history presence information, and future presence information. The presence information may also be sorted into status presence information, location presence information, and so on according to the content of the presence. Furthermore, one piece of presence information may include multiple elements to express different presence information of presentity. Figure 2 shows a flowchart of publishing presence information in the prior art. the flowchart includes the following processes:
101. an action of a presentity changes presence information of the presentity client. For instance, the presence information of the presentity client is changed because the presentity client gets an online state; the presence information of a radio station is changed by a change of the program information.
102. The presentity client publishes the current presence information to the presence server.
103. The presence server updates the recorded presence information of the presentity client with the received current presence information.
104. The presence server distributes the current presence information to the watcher client that subscribes to presence information of the presentity client.
105. The watcher client updates the presence information recorded in the watcher client to the current presence information and displays the current presence information.

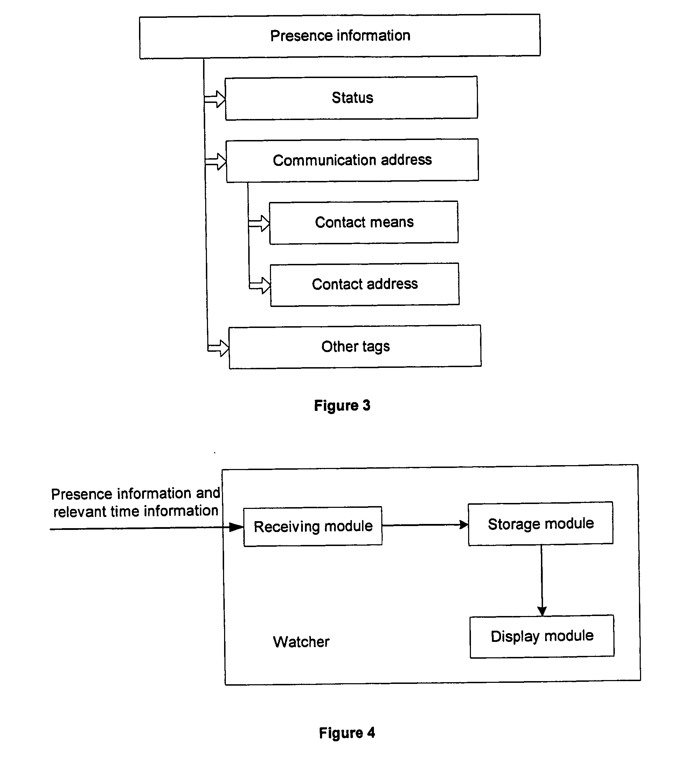

As shown in Figure 3, presence information usually includes multiple elements: a status element, such as online, offline, busy, idle, leave and do-not-disturb, and a location element; a communication address element, indicating the address information of the presentity client elements; other tag elements for extension of new status or tag, like mood and time zone information. The communication address element further includes: contact means, such as email, instant message and short message; contact address, like user account (e.g. email address or QQ number) and telephone number. The presentity client, the presence server or the watcher client stores the presence information corresponding to the presentity and update the presence information of the presentity stored in the presentity client, the presence server or the watcher client changes the presence information if the presence information of the presentity is changed.

Although the presence systems in the prior art (such as Microsoft MSN and Tencent QQ) and the standard proposed by IETF all provide rich presence information, the presence systems only collect and provide the latest presence information of a presentity. Watcher clients, however, in various scenarios, need know history presence information of a presentity, such as location information and mood information over a past period. The presence systems in the prior art may not provide the presence information of the presentity over a past period. The watcher client, therefore, can only know the latest presence information of a presentity from the presence server. They cannot obtain the history presence information of the presentity. In addition, the presentity client may not publish future presence information of the presentity to make the watcher client know the future presence information of the presentity in advance, such as activities and locations of the presentity in future periods of time.

### Summary of the Invention

The invention provides a method for providing presence information, a watcher client, a presence server, a presence system and a presentity client to solve the problem that prior art can provide only current presence information but are unable to provide history or future presence information.

Some embodiments of the present invention provide a method for providing presence information. The method includes: recording time information in time elements of presence information; providing a watcher client with presence information and the time information of the presence information.

The watcher client disclosed by an embodiment of the invention includes: a receiving module, used to receive presence information carrying time information in time elements of presence information; a display module, displaying the presence information and the time information of the presence information.

The presence server disclosed by an embodiment of the invention includes: a receiving module, receiving presence information; a time information processing module, recording time information of the presence information; a distributing module, distributing the presence information and time information of the presence information provided.

The presentity client disclosed by an embodiment of the invention includes: a setup unit, setting time information of presence information in time elements of presence information; a publishing unit, publishing the presence information carrying the time information.

Some embodiments of the invention bring the following benefits:
The method for providing presence information disclosed by an embodiment of the invention sets time elements for presence information and provides relevant time information when providing the watcher with presence information. Thus, the presence information in the presence system is no longer a mere point along the axis of time but a line, providing the watcher with presence information corresponding to the past, the present and the future. The presence service is largely diversified.

Some embodiments of the invention provides a watcher. A receiving module is set in the watcher to receive presence information and relevant time information sent by the presence server, and a display module is set in the watcher to display presence information and relevant time information. Thus, the watcher can not only obtain presence information, but also obtain relevant time information of presence information.

Some embodiments of the invention also provides a presence server. A time related presence information processing module is set in the presence server to record relevant time information of received presence information and provide relevant time information when sending the presence information to the watcher. Thus, the presence server can record not only the presence information, but also the relevant time information and provide the watcher with not only the presence information, but also relevant time information. Thereby, the watcher can know the presence information corresponding to the presentity in the past or future.

Some embodiments of the invention provides a presence system. By recording relevant time information of presence information in the system, the presentity is able to publish future presence information and the watcher is able to obtain the history presence information recorded in the system.

Some embodiments of the invention also provides a presentity, where the initial time information of presence information can be set so that subsequent entities carry out processing according to presence information and relevant time information.

### Brief Description of the Drawings

Figure 1 is a networking diagram for a presence system in the prior arts.
Figure 2 is a flow chart for publishing presence information according to prior art.
Figure 3 is a diagram illustrating the structure of presence information according to prior art.
Figure 4 is a diagram showing the structure of a watcher according an embodiment of the present invention.
Figure 5 is a diagram showing the structure of a presence server according to an embodiment of the present invention.
Figure 6 is a diagram showing the structure of a presence system, where a watcher provided by the present invention completes the recording of history presence information, according to an embodiment of the present invention.
Figure 7 is a diagram showing the structure of a presence system, where a presence server provided by the present invention completes the recording of history presence information, according to an embodiment of the present invention.
Figure 8 is a diagram showing the structure of a presence system, where a presentity publishes time information and a presence server provided by the present invention saves the history records according to an embodiment of the present invention.
Figure 9 is a diagram showing the structure of a presentity according to an embodiment of the present invention.
Figure 10 is a flow chart for the method for providing presence information according to an embodiment of the present invention.

### Detailed Description of the present Invention

Embodiments of the present invention may record time information of all presence information or time information of part of the presence information, e.g. record the time information of status presence information, while not record the time information of other presence information. This is because a watcher client usually concerns about time information of part of the presence information in the non-content time. Furthermore, other embodiments of the present invention may record the time information of the presence information of all presentities or the time information of the presence information of some presentities. Which presentities and which elements of presence information should be recorded with time information are configured uniformly by a system, or configured by the watcher client and the presentity client. The configuration information is usually stored in the presence server or the Extensible Mark-up Language Document Management (XDM) server. The system decides whether to record the time information according to the configuration information. The configuration information may also be stored in the watcher client so that the watcher client may decide whether to record the time information of the presence information according to the configuration information when receiving the presence information that doesn't include time information. The configuration information includes presentity identifiers, presence information identifiers, and a home domain of a presentity identifier. For example, the configuration information below indicates: the time information of the status and mood elements should be recorded for the presentity named sunqian@hauwei.com, and the time information of the status element should be recorded for presentities in the hotmail.com domain.

```
 <timed-presence>
        <entity id="sunqian@hauwei.com">
 <element>status</element>
 <element>mood</element>
 </entity>
 <entity domain="hotmail.com">
 <element>status</element>
 </entity>
 </timed-presence>
```

An embodiment of the present invention provides a watcher client, which may obtain presence information of a presentity. As shown in Figure 4, the watcher client includes: a receiving module to receive presence information, carrying time information, distributed by the presence server; a display module to display the presence information and the time information of the presence information; a storage module to store the presence information and the time information of the presence information which is received by the receiving module and provide the presence information and the time information of the presence information for the display module. The watcher client also stores configuration information, which includes the presentity identifiers and /or the presence information identifier. The storage module also decides whether to store the time information according to the presentity identifiers and/or the presence information identifier.

If the presence server does not provide time information of the presence information to the watcher client when publishing the presence information, the watcher client may record the time information of the presence information. The time information of the presence information includes start time and end time. If the presence information received by the receiving module of the watcher client is without time information, but the configuration information in the watcher client shows that the time information of the presence information of the presentity should be recorded, the receiving module compares the presence information which is the latest but one received by the watcher client, referred to as history presence information, with the presence information which is latest received by the watcher client, referred to as current presence information, to see whether the current presence information is changed. If the current presence information is not changed, the receiving module discards the current presence information. Otherwise, the watcher client records the time of receiving the current presence information as the end time of the history presence information, and records the time of receiving the presence information as the start time of the current presence information. Thus, the start time and end time of the presence information are recorded. The display module may display the current presence information and search for and display the history presence information according to an obtaining presence information request of the watcher client. The display module may also display multiple pieces of history presence information and time information of each piece of history presence information, and the current presence information. The watcher client may preset the number of displaying history presence information of the presentity. If the number of history presence information of the presentity in the watcher client exceeds the number of displaying history presence information of the presentity preset by the watcher client, the watcher client displays multiple pieces of history presence nearest to the current time according to the number of displaying history presence information of the presentity preset by the watcher client.

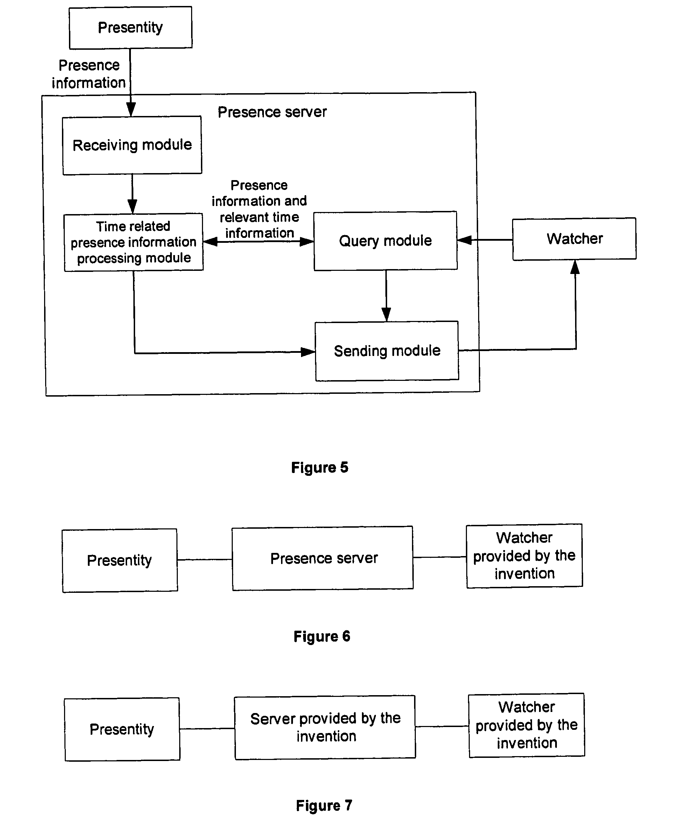

The watcher client may record the time information when the watcher client is online. If the watcher client is offline, the watcher client may not receive presence information of the presentity. Therefore, to provide all history presence information of the presentity, the presence server should also record all history presence information. Other embodiment of the present invention provides a presence server, as shown in Figure 5. The presence server includes a receiving module to receive presence information, a time information processing module to record the time information of the presence information received by the receiving module and provide the time information of presence information received by the receiving module when the presence information received by the receiving module is distributed, and a distributing module to distribute the presence information carrying the time information of the presence information received by the receiving module. And the time information of the presence formation may be provided by the time information processing module. The presence server also stores configuration information, and the configuration information includes presentity identifiers and/or presence information identifiers. The time information processing module determines whether to store time information according to presentity identifiers or presence information identifiers. The time information includes start time and end time. The time information processing module, records the time of receiving the current presence information as the end time of the history presence information, and as the start time of the current presence information. The time information processing module also stores current presence information in the presence server. The presence server further includes a query module. When receiving an obtaining presence information request carrying time condition from the watcher client, the query module distributes the obtaining presence information request to the time information processing module and returns the presence information which time information meet the time condition and time information of the presence information to the watcher client.

Future presence information is usually published by the presentity client. If the presence information published by the presentity client doesn't include time information, that is when the time elements are black, the presence server decides that the presence information is current presence information. If the presence information published by the presentity client includes time information which indicate the future time, the presence server decides that the presence information is future presence information. For instance, the messages published via the presence protocol include future presence information as follows:

```
  <presence entity="sunqian@huawei.com">
       <status from="2006-01-01T08:00" to="2006-01-03T12:00">
          <basic>closed</basic>
          <activities>travel</activities>
       </status>
   </presence>
```

For example, when the presence server receives presence information published by a presentity client carrying time information, the presence server determines whether the time information in presence information is before the time of receiving the presence information. If yes, the presence server ignores the presence information. If the time information in the presence information is the time of receiving the presence information, the presence information may be current presence information, the presence server determines whether the current presence information is identical with the history presence information. If identical, the presence server sets the end time of the current presence information to the end time of the history presence information and the start time is still that recorded in the server. If the time information in the presence information which is the latest received by the presence server only includes a future time, the presence information may be future presence information, and the presence server records the future presence information and time information of the future presence information.

The time information in the presence information is usually specified in the form of a time segment, which may be expressed by absolute time and usually includes the year, month, date, hour and minute. The time information may also be accurate to current. The future time may be expressed by cyclic time information which may not include the year, month and date.

The following table gives three pieces of history presence information of the presentity sunqian@huawei.com, describing the status change of the presentity.

| **Presentity** | **Element** | **Value** | **Start time** | **End time** |
|---|---|---|---|---|
| sunqian@huawei.com | status | open | 2005-10-01 T08:00:00 | 2005-10-01 T12:00:00 |
| sunqian@huawei.com | status | closed | 2005-10-01 T12:00:00 | 2005-10-02 T08:00:00 |
| sunqian@huawei.com | status | open | 2005-10-02 T08:00:00 | 2005-10-02 T11:00:00 |

To speed up the processing, such as storing and sending the presence information, the presence server may preferably store presence information carrying different time information in different locations, for instance, different databases or different database tables. In addition, the presence server may record only the start time or end time of the presence information because the end time of one piece of presence information is the start time of another piece of presence information.

Providing presence information and time information of the presence information has been described by the watcher client, the presentity client and presence server. Generally, the presence service relates to the presentity client, watcher client and presence server together in a presence system. To give a complete description of embodiments of the present invention, it is necessary to describe how a presence system processes presence information which is relating to time. Four embodiments of the present invention are given to describe the presence system

### Embodiment 1: the watcher client records history presence information.

As shown in Figure 6, according to an embodiment of the present invention, a presence system includes a presentity client, a presence server and a watcher client. The presentity client and presence server are as the same as that in the prior art. The watcher client, when receiving current presence information, stores history presence information and records the time of receiving the current presence information as the end time of the history presence information, and as the start time of the current presence information. The watcher client includes a storage module, which stores all presence information of the presentity received by the watcher client and time information of all presence information.

Multiple pieces of history presence information which are stored in the watcher client of a presentity may be simply displayed in tabular form in time sequence. To display the change process of these pieces of history presence information, a graphic display module may be set in the watcher client. The graphic display module generates graphs of all pieces of history presence information and time information of each piece of history presence information and displays the graphs on the watcher client. For some piece of history presence information which relate to number, such as stock information, the graph may take these pieces of history presence information and time information of these pieces of history presence information respectively as the x-coordinate and y-coordinate. If these pieces of history presence information are geographic location information, the graph is a map and the time information of these piece of history presence information is marked at relevant geographic location points. The points may be connected by arrowed lines in time sequence to display the location change of the presentity. Furthermore, the watcher client may record part of pieces of history presence information of some presentities according to the configuration information.

### Embodiment 2: the presence server records history presence information and the watcher client displays the history presence information.

As shown in Figure 7, according to another embodiment of the present invention, a presence system includes a presentity client, a presence server recording history presence information and a watcher client. The presence server includes a time information processing module. And the time information processing module records time information of all history presence information received by the presence server and provides the time information of the history presence when the history presence information are distributed. The watcher client may display the history presence information. The method of displaying history presence information is similar to that in embodiment 1. The watcher client stores history presence information. If the watcher client receives current presence information which is different to the history presence information, the watcher client updates the history presence information with the current presence information.

The presentity client publishes a current presence information to the presence server if presence information such as status of the presentity changes. The presence server receives the current presence information, and the time information processing module in the presence server stores the history presence information, and records the time of receiving the current presence information as the end time of the piece of history presence information, and as the start time of the current presence information.

The presence server may further include a query module. When receiving an obtaining presence information request carrying time condition from the watcher client, the query module queries the history presence information and provides the history presence information which time information meets the time condition to the watcher client. For instance, the watcher client sends the obtaining presence information request to the presence server for the location information of the presentity sunqian@huawei.com during the period from "2005-10-23T00:00:00 to 2005-10-24T00:00:00". The presence server searches for all history location information that meet the conditions and returns these pieces of history location information to the watcher client. The watcher client displays these pieces of history location information received by the watcher client and the location change process in a map. One piece of location information is usually defined in longitude and latitude coordinates or relative location coordinates. Map information may be preset in the watcher or obtained from an external geographic information system (GIS) server.

It is obvious that network resources are misused if the presence server distributes the history presence information every time. To save network resources, the presence server may record which pieces of history presence information are distributed to the watcher client. If one piece of history presence information is already distributed to the watcher client, the presence server does not distribute the piece of presence information to the watcher client for a second time unless the obtaining presence information request sent by the watcher client contains a time condition that includes the time of the piece of presence information. A table may be used to record which pieces of history presence information which presentities are already distributed to which watcher clients. The table includes presentity identifiers, watcher identifiers, presence information identifiers and time information of the history presence information which has been sent.

The management of access to history presence information may be the same as the management of access to presence information. If a watcher client requests to access the history presence information of a presentity, the presence server determines whether the watcher client is entitled to access the presence information of the presentity. If yes, the presence server allows the watcher client to access the history presence information of the presentity. Otherwise, the presence server denies the obtaining presence information requests from the watcher client.

To meet requirements of national security and operation management, the presence server should restrict accessing the history presence information. A listening module may be set in the presence server. The listening module provides a listening interface. When the listening module receives a listening request with successful authentication (e.g. authentication of the name and password of the user sending the listening request), the listening module accesses the history presence information directly.

A recording module is also set in the presence server to record the presence information and the time information of the presence information. And the current presence information and the history presence information are stored in the recording module separately to increase data access speed and processing efficiency because most processing actions are specific to the current presence information. The recording module may also be installed in the XDM server in the presence system.

The presence server records the online time and the subscription time of the watcher client. The presence server distributes the history presence information which is received by the presence server during the time when the watcher client is offline, and the presence server distributes the history presence information to which isn't subscribed by the watcher client. This may avoid repetitive distributing of presence information already distributed to the watcher client.

### Embodiment 3: the presentity client publishes presence information carrying time information to the presence server; the presence server receives and stores the presence information and distributes the presence information to the watcher client; the watcher client receives and displays the presence information and time information of the presence information.

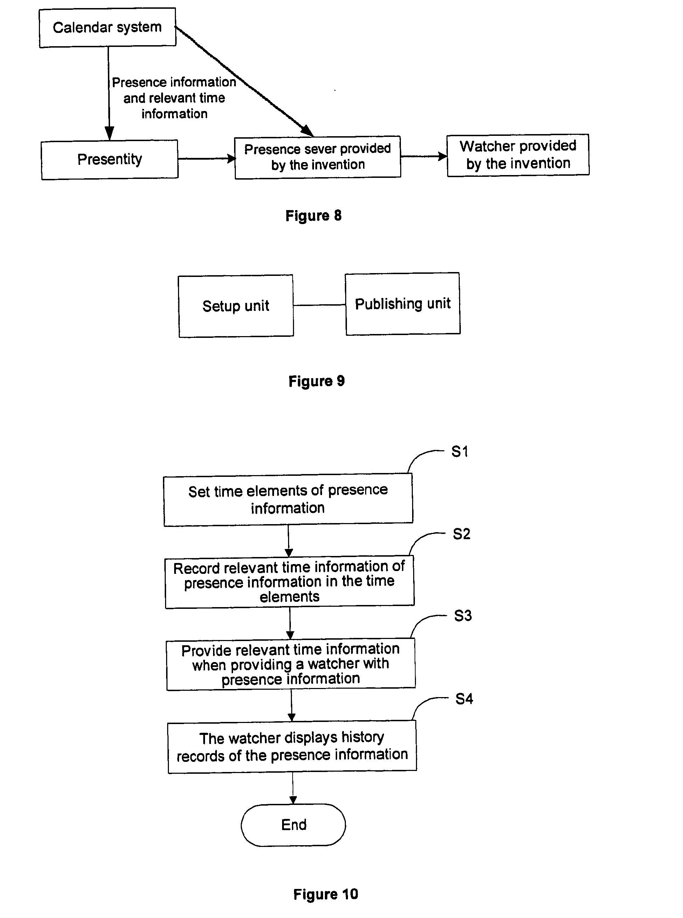

As shown in Figure 8, according to an embodiment of the present invention, a presence system includes a presentity client, a presence server and a watcher client connected in sequence. All the three should process the time information of presence information. This embodiment mainly applies to describe the publishing of future presence information. The presentity client may set the future presence information carrying time information directly and publish the future presence information to the presence server.

Figure 9 shows the structure of a presentity client according to an embodiment of the present invention. The presentity client includes a setup unit for setting time information of presence information and a publishing unit for publishing presence information carrying time information. The presentity client may communicate with a calendar system, and the presentity client input schedule information, such as meeting schedules, outing activities and appointments in the calendar system. The schedule information of some presence information of the presentity client, such as activities. If the calendar system runs on the presentity client, the presentity client may obtain presence information and time information of the presence information from the calendar system and publish the presence information carrying the time information to the presence server.

If the calendar system runs on the presence server, the presence server may obtain the presence information and time information of the presence information from the calendar system. Usually, a calendar system may be integrated with a presence system, using the same username and password for authentication. When a user inputs calendar information to the calendar system, the calendar system distributes presence information carrying time information to the presence server automatically. The presence server then distributes the presence information carrying the time information to the watcher client.

The presence server stores one piece of future presence information referred to as first piece of future presence information and time information of the first piece of future presence information. If the presentity client or calendar system publishes a second piece of future presence information carry time information, which conflict with the first piece of future presence information. For instance, the time information of the first piece of future presence information is the same with the time information of the second piece of future presence information, but the first piece of future presence information is different to the second piece of future presence information, the presence server updated the first piece of future presence information with the second piece of future presence information to modify the schedule of the presentity.

### Embodiment 4: the presentity client distributes presence information carrying time information to the watcher client in a point-to-point (P2P) manner.

According to an embodiment of the present invention, the presence system includes a presentity client, a presence server and a watcher client. The presentity client stores presence information and time information of presence information, the presence information stored in the presence server may include both history presence information and future presence information. The presence information may be published and distributed according to the prior procedure. When the presence information is published, the presence information and time information of the presence information are recorded in the presentity client when publishing the presence information. For presence information with time information, such as history presence information, is sent by the presentity client to the watcher client according to an obtaining presence information request from the watcher client. Thus, the load of the presence server is greatly relieved.

Figure 10 shows the method for providing presence information and time information of the presence information according to an embodiment of the present invention. The method includes the following processes:
S1. Set time elements in presence information;
S2. Record time information of the presence information in the time elements;
S3. Provide the watcher client with presence information carrying information of the presence information;
S4. The watcher client displays history presence information

The following are embodiments of the method of the present invention.

Method embodiment 1: time information of presence information is set by the presentity client. The presentity client publishes presence information carry time information to the presence server. The presence server distributes the presence information carrying time information to the watcher client. Time elements of the presence information which are stored in the presence server are set in presence information. And the time elements are used for recording time information of the presence information. The processes of storing the presence information and time information of the presence information as follows:
S101. The presentity client sets one piece of presence information and time information of the presence information.

Future presence information and time information of the future presence information may be set by the presentity client, or through the calendar program in the presentity client. In a relevant interface, the presentity enters future schedules, such as activities like business trip and meeting or location information, or desired communication means in a future period of time.
S102. The presentity client publishes the piece of future presence information carrying time information c to the presence server.

The piece of presence information published by the presentity client through a publishing presence information message includes a field to record time information, and the presence information is in XML format. If one piece of presence information (i.e. a current presence information) is published, the current presence information may not include the field to record time information, or the field to record time information may be blank. The presentity client may further specify a watcher client that may obtain the future presence information, for example, via carrying the watcher identifier in the publishing presence information message. A watcher client which is not specified by the presentity client is unable to obtain the future piece of presence information. The presence server distributes the piece of future presence information carrying time information to the watcher client according to the watcher identifier in the message upon receiving the piece of future presence information.
S103. The presence server distributes the piece of future presence information carrying time information to the watcher client.

Generally speaking, the presence server only distributes the piece of future presence information to watcher clients subscribing to the presence information of the presentity. If the watcher client subscribing to the presence information of the presentity is offline and unable to receive the piece of future presence information, the presence server stores the piece of future presence information carrying time information and distributes the piece of future presence information carrying time information when the watcher client is online or the watcher client could receive the piece of future presence information.
S104. The watcher displays the piece of future presence information and time information of the piece of future presence information.

Method embodiment 2: time information of current presence information is set by the presence server. The presence server, upon reception of one piece of current presence information published by the presentity client, stores the piece of current presence information, and records the time of receiving the piece of current presence information as the end time of the piece of history presence information and records the time of receiving the piece of current presence information as the start time of the piece of current presence information. Then the presence server distributes the piece of current presence information carrying time information to the watcher client.
S201. The presentity client publishes the piece of current presence information to the presence server.
S202. The presence server stores the piece of history presence information.

The presence server, when receiving the piece of current presence information published by the presentity client, stores the piece of history presence information of the presentity and records the time of receiving the piece of current presence information as the end time of the piece of history presence information and records the time of receiving the piece of currunt presence information as the start time of the piece of current presence information. S203. The presence server distributes the piece of history presence information carrying the time information of presence information to the watcher client.

The presence server may distribute to the watcher client the pieces of history presence information carrying time information which is published by the presentity client when the watcher client is offline or does not subscribe to the presence information. The presence server stores the online and offline information as well as the subscription time information (including subscription time and validity) of the watcher client. Based on that, the presence server may send only the history presence information that the watcher client has not received to the watcher client.
S204. The watcher client displays the piece of history presence information from the presence server and the time information of the piece of history presence information.

The watcher client, upon reception of the piece of history presence information, stores the piece of history presence information and displays the piece of history presence information according to display settings of the watcher client. The display settings may be quantity of presence information for display or display mode. For example, display the latest 3 pieces of the history presence information received by the watcher client. Display of large quantities of history presence information will result in a large information in display interface. Moreover, display of large quantities of history presence information is unnecessary. So history presence information may be displayed at display history presence information request of a watcher client.

When the watcher client does not request, only the piece of current presence information is displayed.

Method embodiment 3: time information of presence information is set by the watcher client. The watcher client, when receiving a current presence information sent by the presence server, saves a history presence information and records the time of receiving the current presence information as the end time and records the time of receiving the current presence information as the start time of the current presence information.
S301. The presentity client publishes the piece of current presence information to the presence server.
S302. The presence server distributes the piece of current presence information to the watcher client.
S303. The watcher client stores the piece of history presence information.

The watcher client, when receiving the piece of current presence information distributed by the presence server, saves the piece of history presence information and records the time of receiving the piece of current presence information as the end time of the piece of history presence information and takes the time of receiving the piece of current presence information as the start time of the current presence information.
S304. The watcher client displays the history presence information.

The watcher client may display all presence information of a specific presentity received by the watcher client in a specified period of time. It may also display the change of a presence information of a presentity in a specified period of time.

Although the present invention has been illustrated and described with reference to some preferred embodiments, the present invention is not limited to such embodiments. Various changes, variations, alterations, transformations, and modifications may be made by those skilled in the art without departing from the spirit and scope of the present invention. And the present invention is intended to cover such changes, variations, alterations, transformations, and modifications as fall into the scope of protection defined by the following claims or their equivalents.

## Claims

1. A method for providing presence information, comprising:
setting time elements of presence information;
recording time information in a time elements of current presence information;
providing a watcher client with presence information and the time information of the presence information.

2. The method of claim 1, wherein the time information comprise start time and/or end time, and recording time information in a time elements of presence information comprises:
receiving, by a presence server, a current presence information of presentity;
storing a history presence information, recording the time of receiving the current presence information as the end time of the first presence information, and recording the time of receiving the current presence information as the start time of the current presence information.

3. The method of claim 1, wherein the presence information comprises many elements, and the providing the time information of presence information comprises:
providing time information of each element of the presence information.

4. The method of claim 1, after providing a watcher client with a current presence information and time information, the method further comprising: displaying , by the watcher client, the time information of the current presence information and the current presence information.

5. The method of claim 4, wherein displaying the time information of the current presence information and the current presence information comprises:
displaying the time information of each piece of the presence information and multiple pieces of the presence information.

6. The method of claim 5, wherein displaying the time information of the presence information and the presence information comprises:
displaying the latest multiple pieces of presence information of a presentity received by the watcher client according to a preset value and the time information of each presence information, if the number of pieces of presence information is more than the number of the preset value.

7. The method of claim 5, wherein displaying time information and displaying presence information, the method further comprises: the watcher client displays current values of presence information elements in highlight.

8. The method of claim 1, providing a watcher with presence information and time information, the method further comprising:
receiving a obtaining presence information request, the request comprise a time condition;
and the time information of the c presence information meet the time condition.

9. The method of claim 2, wherein the recording relevant time information of presence information in time elements further comprises: sorting presence information according to the start time or end time of multiple piece of presence information of a presentity.

10. A watcher client, comprising:
a receiving module, receiving a current presence information and time information of the current presence information sent by a presence server;
a display module, displaying the current presence information and the time information of the presence information received by the receiving module.

11. The watcher client of claim 10, further comprising:
a storage module, storing the presence information and the time information of the presence information received by the receiving module and providing the display module with the presence information and time information of the presence information.

12. The watcher client of claim 10, wherein the display module is a graphic display module; and the graphic display modulegenerating graphs according to presence information and time information of presence information and displaying the graphs on the watcher client.

13. The watcher client of claim 12, wherein the graphs take presence information and the time information of presence information as x-coordinate and y-coordinate.

14. The watcher client of claim 12, wherein the presence information is geographic location information and the graphs are maps where time information is marked at relevant geographic location points.

15. The watcher client of claim 11, the watcher client further comprising:
a monitoring module, taking the presence information relevant to the time information as the current presence information, if detecting that time information stored in the storage module includes the current time,, and displaying the information in highlight through the display module.

16. The watcher client of claim 10, wherein the time information comprises start time and end time , the receiving module, further storing the history presence information and recording the time of receiving the current presence information as the end time of the history presence information, and as the start time of the current piece of presence information if the time elements in the presence information are black.

17. The watcher client of claim 11, the watcher client further comprising:
configuration information, including presentities identifiers and/or presence information identifiers;
and the storage module determining whether to store the time information of the current presence information according to presentities identifiers and/or presence information identifiers.

18. A presence server, comprising:
a receiving module, receiving current presence information;
a time information processing module, recording time information of the presence information;
a distributing module, distributing the presence information and time information of the presence information provided by the time information processing module.

19. The presence server of claim 18, wherein the time information comprises start time and end time, and the time information processing module, storing history presence information and recording the time of receiving the current presence information as the end time of the history presence information, and recording the time of receiving the current presence information as the start time of the current time information.

20. The presence server of claim 18, further comprising:
a query module, providing presence information and time information of the presence information that meet the time condition upon receiving the obtaining presence information request.

21. The presence server of claim 18, wherein the presence server further comprises configuration information including presentity identifiers and/or presence information identifiers; and
the time information processing module, further determine whether to store the time information of presence information according to presentity identifiers of and/or presence information identifiers.

22. The presence server of any of claim 18 to claim 21, wherein the sending module sends the all presence information of a presentity and time information of each presence information which received by the presence server during the watcher client is offline or does not subscribe to the presence information of the presentity.

23. A presence system, comprising a presentity client, a watcher client and a presence server, the presence system recording time information of presence information.

24. The presence system of claim 23, wherein: the time information of presence information is initially set by the presentity client; the presentity client publishes presence information and time information to the presence server; the presence server sends presence information and relevant time information to the watcher client.

25. The presence system of claim 23, wherein: the time information of presence information is initially set by the presence server, the time information comprising start time and end time; the presence server, when receiving presence information published by the presentity client, saves the history presence information by taking the current time as the end time, records received presence information by taking the current time as the start time, and then sends the presence information and relevant time information to the watcher client.

26. The presence system of claim 23, wherein: the time information of presence information is initially set by the watcher client, the time information comprising start time and end time; the watcher client, when receiving presence information sent by the presence server, saves the history presence information by taking the current time as the end time and takes the current time as the start time of received presence information.

27. A presentity client, comprising:
a setup unit, setting time information of presence information;
a publishing unit, publishing the presence information and relevant time information.
